Europäisches Patentamt

European Patent Office

Office européen des brevets

(11) Veröffentlichungsnummer: **0 142 153 B1**

(12) **EUROPÄISCHE PATENTSCHRIFT**

(45) Veröffentlichungstag der Patentschrift:
**14.09.88**

(21) Anmeldenummer: **84113667.4**

(22) Anmeldetag: **13.11.84**

(51) Int. Cl.⁴: **G 01 J 5/00**, G 05 D 23/27,
A 47 J 27/62

(54) **Anordnung zum Messen der Temperatur in einem Heizsystem aus Heizplatte und Kochtopf.**

(30) Priorität: **15.11.83 DE 3341234**

(43) Veröffentlichungstag der Anmeldung:
**22.05.85 Patentblatt 85/21**

(45) Bekanntmachung des Hinweises auf die Patenterteilung:
**14.09.88 Patentblatt 88/37**

(84) Benannte Vertragsstaaten:
**AT BE CH FR GB IT LI LU NL SE**

(56) Entgegenhaltungen:
**EP - A - 0 089 247**
**DE - A - 3 238 769**
**GB - A - 2 072 334**

(73) Patentinhaber: **Fissler GmbH, Im Wörth
Postfach 12 23 20, D-6580 Idar-Oberstein 2 (DE)**

(72) Erfinder: **Wolf, Kurt, Langwiesenweg 71, D-7547 Wildbad
(DE)**

(74) Vertreter: **Vogel, Georg, Hermann-Essig-Strasse 35,
D-7141 Schwieberdingen (DE)**

**Beschreibung**

Die Erfindung betrifft eine Anordnung zum Messen der Temperatur in einem Heizsystem aus einem auf einer Heizplatte abgestellten und erwärmten Kochtopf mit Kochgut, bei der die Temperatur des im Kochtopf enthaltenen Kochgutes ermittelt wird.

Bei den bekannten Anordnungen dieser Art werden am oder im Kochtopf ein Temperaturmessfühler angebracht, der in Abhängigkeit von der Temperatur ein analoges Messwertsignal abgibt. Diese Messwertsignale werden vor allen Dingen zur Regelung der Heizleistung der Heizplatte eingesetzt. Dabei bereitet gerade die Übertragung der Messwertsignale von dem Kochtopf zu der Steuerschaltung, die in dem Herd oder dgl. untergebracht ist, erhebliche Schwierigkeiten. Eine Übertragung über eine Leitung von dem Kochtopf zur Steuerschaltung scheidet aus, da damit die Handhabung des Kochtopfes zu stark behindert würde. Bekannte Anordnungen sehen daher eine drahtlose Übertragungsstrecke vor, die vorzugsweise als Infrarot-Strecke ausgelegt ist. Dabei muss aber am Kochtopf eine batteriegespeicherte Sendeeinrichtung vorgesehen sein, die bei der Reinigung des Kochtopfes aus Sicherheitsgründen abgenommen wird. Dies bringt gerade in der Konstruktion zusätzliche Massnahmen, um diese lösbare Anbringung der Sendeeinrichtung zu realisieren.

Es ist Aufgabe der Erfindung, eine Anordnung der eingangs erwähnten Art zu schaffen, bei der der Kochtopf so gestaltet werden kann, dass er wie ein üblicher Kochtopf gehandhabt und gereinigt werden kann, keine Batterie für die Sendeeinrichtung benötigt und dennoch eine ausreichend genaue Messung der Temperatur des im Kochtopf enthaltenen Kochgutes zulässt.

Diese Aufgabe wird nach der Erfindung dadurch gelöst, dass die Kochtöpfe im Übergangsbereich von dem Topfboden zur Topfwand mit ringförmigen Abstrahlflächen versehen sind, dass ein Strahlungsfühler mit Fokussiereinrichtung auf die Abstrahlfläche einer auf der Heizplatte abgestellten Kochtopfes ausgerichtet ist und dass der Strahlungsfühler in einem Abstand zu der Abstrahlfläche angeordnet ist, der dem Abstand der Engstelle im Strahlungsmessfeld des Strahlungsfühlers von der Eintrittsfläche des Strahlungsfühlers entspricht. Diese Anordnung basiert auf der allgemein bekannten Tatsache, dass jeder Körper oberhalb des absoluten Nullpunktes ($-273,16\,°C$) eine elektromagnetische Strahlung aussendet. Dabei ist die Intensität der Strahlung ein Mass für die Temperatur. Es sind sogenannte Strahlungsfühler auf dem Markt, mit denen die Intensität der Strahlung gemessen werden kann. Sieht man an den Kochtöpfen ringförmige Abstrahlflächen vor, die dunkelmatt, insbesondere schwarz ausgebildet sind, dann kann der ortsfest angebrachte Strahlungsfühler unabhängig von der Winkelstellung des Kochtopfes auf der Heizplatte die Strahlungsintensität und damit die Temperatur der Abstrahlfläche messen. Die Wahl der Abstrahlflächen im Übergangsbereich zwischen Topfboden und Topfwand bringt das genaueste Messergebnis, da die Temperaturdifferenz zwischen dem Kochgut und der Topfwand an dieser Stelle am kleinsten ist und durch den wesentlich heisseren Topfboden nicht verfälscht wird. Da die Entfernung zwischen der Abstrahlfläche und dem Strahlungsfühler bei der Anwendung in einem Herd oder dgl. begrenzt ist, wird ein Strahlungsfühler mit Fokussiereinrichtung eingesetzt, der bei kleinen Entfernungen von z.B. 15 cm bis 30 cm eine Engstelle im Messfeldbereich aufweist, die nur einen Durchmesser von wenigen Millimetern hat. Dann kann das Messfeld optimal auf die Breite der Abstrahlflächen angepasst werden und umgekehrt brauchen die Abstrahlflächen nur eine entsprechend kleine Breite aufzuweisen.

Alle optischen und elektrischen Einrichtungen können im Herd oder dgl. untergebracht werden. Die Kochtöpfe weisen ausser der Abstrahlfläche keine zusätzlichen Merkmale auf und können wie herkömmliche Kochtöpfe gehandhabt und gereinigt werden. Dabei kann es sich auch um Dampfdruckkochtöpfe handeln.

Damit ein auf eine Heizplatte abgestellter Kochtopf stets dieselbe Entfernung zur Eintrittsfläche des ortsfesten Strahlungsfühlers einnimmt, sieht eine Ausgestaltung vor, dass die Kochtöpfe auf den Heizplatten in vorgegebenen Stellungen fixiert sind. In einfachster Weise kann dazu vorgesehen sein, dass die Heizplatten von Halterändern oder dgl. umgeben sind, die über die Stellflächen der Heizplatten vorstehen.

Die optimale Übertragung der von den Abstrahlflächen abgegebenen Strahlung wird dadurch sichergestellt, dass die Abstrahlflächen der auf den Heizplatten abgestellten Kochtöpfe parallel und mittig zu der Eintrittsfläche des Strahlungsfühlers ausgerichtet sind.

Damit die von den Abstrahlflächen abgestrahlte Strahlung durch Strahlung des Topfbodens nicht verfälscht wird, ist die Ausgestaltung so, dass die ringförmigen, umlaufenden Abstrahlflächen senkrecht zum Topfboden des Kochtopfes stehen.

Sieht eine weitere Ausgestaltung vor, dass die Eintrittsfläche des Strahlungsfühlers mittels einer strahlungsdurchlässigen Schutzscheibe abgedeckt ist, dann wird die Eintrittsfläche des Strahlungsfühlers geschützt. Die Schutzscheiben können leicht gereinigt werden.

Um das vom Strahlungsfühler mit den nachgeschalteten Auswerteeinrichtungen abgegebene Messwertsignal auf die Temperatur des Kochgutes zu eichen, sieht eine Ausgestaltung vor, dass ein mit Wasser gefüllter Kochtopf als Eichelement verwendet ist, wobei beim Kochen des Wassers die Auswerteschaltung des Strahlungsfühlers auf die Siedetemperatur des Wassers geeicht wird.

Da ein Strahlungsfühler ein kostenträchtiges Element ist, kann der Aufwand für einen Herd mit mehreren Heizplatten dadurch reduziert werden, dass ein Strahlungsfühler im Zeitmultiplex für mehrere Kochtöpfe, die im gleichen Abstand zum Strahlungsfühler angeordnet sind, verwendet ist.

Der Zeitmultiplexbetrieb kann nach einer Ausgestaltung dadurch realisiert werden, dass eine mechanische Stelleinrichtung den Strahlungsfühler mit seiner Eintrittsfläche nacheinander auf die Abstrahlflächen mehrerer Kochtöpfe einstellt und ausrichtet. Die so gewonnenen Messwertsignale lassen sich in der Auswerteschaltung leicht der zugeordneten Heizplatte und dem darauf stehenden Kochtopf zuordnen.

Eine andere Ausgestaltung für den Zeitmultiplexbetrieb sieht vor, dass der Strahlungsfühler mit seiner Eintrittsfläche über optische Systeme mit den Abstrahlflächen mehrerer Kochtöpfe in Verbindung steht und dass die optischen Systeme mittels Abblendeinrichtungen, wie Blenden oder dgl., wahlweise durchschaltbar und sperrbar sind. Für die Durchschaltung und Sperrung der optischen Systeme lassen sich vorzugsweise elektronisch steuerbare Lichtventile verwenden, die keine mechanisch bewegten Teile aufweisen.

Eine andere Ausgestaltung ist dadurch gekennzeichnet, dass mittels eines drehbar gelagerten und verstellbaren Spiegels die Ausrichtung des ortsfesten Strahlungsfühlers nacheinander auf die Abstrahlflächen mehrerer Kochtöpfe vorgenommen wird.

Die Erfindung wird anhand eines in der Zeichnung dargestellten Ausführungsbeispiels näher erläutert. Es zeigt:

Fig. 1 in schematischer Seitenansicht einen Herd mit zwei Heizplatten und darauf abgestellten Kochtöpfen und

Fig. 2 den Messfeldbereich des verwendeten Strahlungsfühlers mit Fokussiereinrichtung.

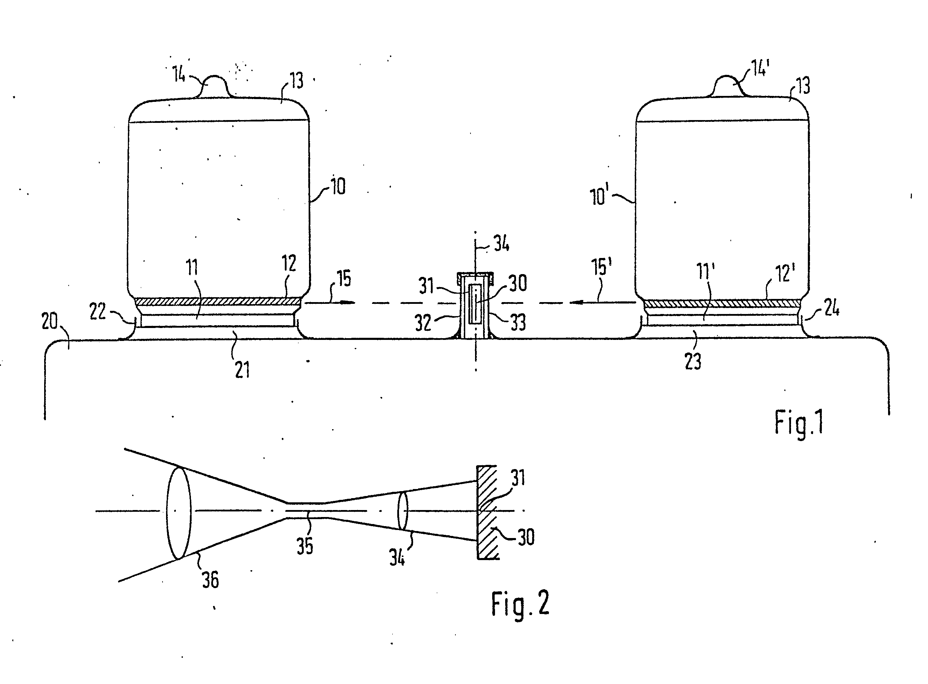

Wie die Seitenansicht nach Fig. 1 zeigt, hat der Herd 20 zwei Heizplatten 21 und 23, die etwas an der Oberseite des Herdes 20 vorstehen und ringsum durch einen erhöhten Halterand 22 bzw. 24 begrenzt sind. Mit diesen Halterändern 22 und 24 wird sichergestellt, dass die Kochtöpfe 10 und 10' in definierter Stellung auf den Heizplatten 21 und 23 abgestellt werden können. Dabei können die Kochtöpfe 10 und 10' auf den Heizplatten 21 und 23 beliebig verdreht werden. Wie die schematisch angedeuteten Ventile 14 und 14' an den Deckeln 13 und 13' zeigen, können die Kochtöpfe 10 und 10' auch als Dampfdruckkochtöpfe ausgebildet sein. Die Kochtöpfe 10 und 10' stehen mit ihren Topfböden 11 und 11' in Wärmekontakt mit den elektrisch beheizten Heizplatten 21 und 23. Die Topfböden 11 und 11' gehen über eine als Absatz ausgebildeten abgesetzte Abstrahlfläche 12 und 12' in die Topfwände über. Diese Abstrahlflächen 12 und 12' verlaufen rings um die Kochtöpfe 10 und 10' und sind dunkelmatt, insbesondere schwarz ausgelegt, um eine möglichst gute Abstrahlung der Wärmestrahlen zu erhalten.

Unabhängig von der Drehstellung der Kochtöpfe 10 und 10' werden die Wärmestrahlen, wie die Pfeile 15 und 15' zeigen, auf dem geradlinigen Weg zu dem Strahlungsfühler 30 mit Fokussiereinrichtung gelangen. Dieser Strahlungsfühler 30 ist auf die Wellenlänge der abgestrahlten Strahlung ausgelegt und gibt über seine Auswerteschaltung ein der Temperatur im Kochtopf entsprechendes Signal ab. Die Auswerteschaltung lässt sich dabei in einfacher Weise eichen, wenn der Kochtopf mit Wasser gefüllt wird und das Wasser zum Kochen gebracht wird. Da die Siedetemperatur des Wassers bekannt ist, lässt sich die Auswerteschaltung direkt auf die Temperatur im Kochtopf eichen. Verluste beim Übergang durch die Topfwand und Schwankungen in der Strahlungsintensität der Abstrahlflächen 12 und 12' lassen sich so eliminieren.

Bei den kleinen Entfernungen zwischen dem auf einer Heizplatte 21 oder 23 abgestellten Kochtopf 10 oder 10' zu dem Strahlungsfühler 30, die auf einem Herd 20 realisierbar sind, muss ein Strahlungsfühler 30 mit Fokussiereinrichtung eingesetzt werden. Wie Fig. 2 zeigt, hat der Messfeldbereich eines derartigen Strahlungsfühlers 30 in einem kleinen Abstand von seiner Eintrittsfläche 31 eine Engstelle 35 im Messfeldbereich, die einen Durchmesser von wenigen Millimetern, z.B. 3 bis 6 mm, hat. Die Auslegung wird nun so gewählt, dass die Engstelle 35 des Messfeldbereiches des Strahlungsfühlers 30 mit der Fokussiereinrichtung auf die Abstrahlfläche 12 oder 12' eines Kochtopfes 10 oder 10' fällt. Dadurch ist also der Abstand des Strahlungsfühlers 30 von dem zugekehrten Teil der ringförmigen Abstrahlfläche 12 oder 12' bestimmt. Da diese Engstelle 35 im Messfeldbereich im Anschluss sich wieder kontinuierlich im Durchmesser vergrössert, wie die Abschnitte 34 und 36 zeigen, ist es wichtig, dass der Kochtopf 10 oder 10' auf der Heizplatte 21 oder 23 so fixiert ist, dass sich der Abstand der Abstrahlflächen 12 oder 12' nicht wesentlich verändern kann. Dies wird durch die Halteränder 22 und 24 sichergestellt. Es sind jedoch auch anders gestaltete Verstellsicherungen denkbar und anwendbar.

Das Ausführungsbeispiel deutet eine weitere Vereinfachung der Anordnung an. Da der Strahlungsfühler 30 ein kostenträchtiges Bauteil ist, lässt sich die Anordnung auch so gestalten, dass sich dieser im Zeitmultiplexverfahren nacheinander für die Messung der Temperatur in mehreren Kochtöpfen 10 und 10' einsetzen lässt. Dabei kann die Eintrittsfläche 31 mittels mechanischer Stelleinrichtungen nacheinander auf die Abstrahlflächen 12 und 12' ausgerichtet werden, wobei der Strahlungsfühler 30 jeweils denselben Abstand zu den Abstrahlflächen 12 und 12' einnimmt. Die Drehachse 34 deutet diese mechanische Verdrehung schematisch an. Dabei ist auch gezeigt, dass strahlungsdurchlässige Schutzscheiben 32 und 33 die Eintrittsfläche 31 des Strahlungsfühlers 30 abdecken. Diese Schutzscheiben 32 und 33 können leicht gereinigt werden. Der Durchlassbereich der Schutzscheiben 32 und 33 ist auf den Arbeitsbereich des Strahlungsfühlers 30 von etwa 8 μ bis 20 μ Wellenlänge auszulegen.

Für das Zeitmultiplexverfahren bietet sich auch eine weitere Lösung an. Die Strahlen 15 und 15' werden über optische Systeme auf die Eintrittsfläche 31 eines feststehend angeordneten Strahlungsfühlers 30 geführt.

In diese optischen Systeme sind Abblendeinrichtungen eingeschaltet, über die die optischen Systeme wahlweise durchgeschaltet oder gesperrt werden können. Durch zyklische Steuerung dieser Abblendeinrichtungen lässt sich der Zeitmultiplexbetrieb verwirklichen. Die Auswerteschaltung muss dann nur in bekannter Weise die Zuordnung der zyklisch erhaltenen Messwertsignale vornehmen. Dabei kann das Fehlen eines Messwertsignals die falsche Belegung einer Heizplatte anzeigen, wenn diese eingeschaltet ist. Als Abblendeinrichtungen werden bevorzugt elektronisch steuerbare Lichtventile verwendet, wie sie als elektronische Blenden bereits für Kameras und dgl. vorgeschlagen wurden.

Das Fehlen eines Messwertsignals am Ausgang des Strahlungsfühlers 30, das einer eingeschalteten Heizplatte 21 oder 23 zugeordnet ist, wird nach einer bestimmten Vorgabezeit als Störungssignal gewertet und zur Abschaltung der Heizplatte 21 oder 23 ausgenützt. Registriert der Strahlungsfühler 30 nach der Vorgabezeit keine Strahlung, dann steht kein Kochtopf auf dieser Heizplatte. Fehlt das Messwertsignal dagegen bei einer nicht eingeschalteten Heizplatte, dann besteht keine Gefahr und die Temperaturmessung kann im Zeitmultiplexbetrieb für diese Heizplatte entfallen. Dieselben Überwachungen sind auch bei einer einzelnen Heizplatte und einem stets darauf ausgerichteten Strahlungsfühler durchführbar.

Die Ausrichtung der von den Abstrahlflächen 12 und 12' mehrerer Kochtöpfe 10 und 10' abgestrahlten Wärmestrahlen auf den ortsfesten Strahlungsempfänger 30 kann auch mittels eines drehbar gelagerten und verstellbaren Spiegels vorgenommen werden. Diese Lösung hat den Vorteil, dass der Verlust auf den Übertragungsstecken vernachlässigbar ist.

**Patentansprüche**

1. Anordnung zum Messen der Temperatur in einem Heizsystem aus einem auf einer Heizplatte abgestellten und erwärmten Kochtopf mit Kochgut, bei der die Temperatur des im Kochtopf enthaltenen Kochgutes ermittelt wird, dadurch gekennzeichnet,

dass die in dem System verwendbaren Kochtöpfe (10, 10') im Übergangsbereich von dem Topfboden (11, 11') zur Topfwand mit ringförmigen, umlaufenden Abstrahlflächen (12, 12') versehen sind,

dass ein Strahlungsfühler (30) mit Fokussiereinrichtung auf die Abstrahlfläche (12 bzw. 12') des auf der Heizplatte (21, 23) abgestellten Kochtopfes (10 bzw. 10') ausgerichtet ist und

dass der Strahlungsfühler (30) in einem Abstand zu der Abstrahlfläche (12 bzw. 12') angeordnet ist, der dem Abstand der Engstelle (35) im Strahlungsmessfeld (Fig. 2) des Strahlungsfühlers (30) von der Eintrittsfläche (31) des Strahlungsfühlers (30) entspricht.

2. Anordnung nach Anspruch 1, dadurch gekennzeichnet, dass die Kochtöpfe (10, 10') auf den Heizplatten (21, 23) in vorgegebenen Stellungen fixiert sind.

3. Anordnung nach Anspruch 2, dadurch gekennzeichnet, dass die Heizplatten (21, 23) von Halterändern (22, 24) oder dgl. umgeben sind, die über die Stellflächen der Heizplatten (21, 23) vorstehen.

4. Anordnung nach einem der Ansprüche 1 bis 3, dadurch gekennzeichnet, dass die Abstrahlflächen (12, 12') der auf den Heizplatten (21, 23) abgestellten Kochtöpfe (10, 10') parallel und mittig zu der Eintrittsfläche des Strahlungsfühlers (30) ausgerichtet sind.

5. Anordnung nach einem der Ansprüche 1 bis 4, dadurch gekennzeichnet, dass die Abstrahlflächen (12, 12') senkrecht zum Topfboden (11, 11') des Kochtopfes (10, 10') stehen.

6. Anordnung nach einem der Ansprüche 1 bis 5, dadurch gekennzeichnet, dass die Abstrahlflächen (12, 12') dunkelmatt, insbesondere schwarz sind.

7. Anordnung nach einem der Ansprüche 1 bis 6, dadurch gekennzeichnet, dass die Eintrittsfläche des Strahlungsfühlers (30) mittels einer strahlungsdurchlässigen Schutzscheibe (32, 33) abgedeckt ist.

8. Anordnung nach einem der Ansprüche 1 bis 7, dadurch gekennzeichnet, dass ein mit Wasser gefüllter Kochtopf (10, 10') als Eichelement verwendet ist, wobei beim Kochen des Wassers die Auswerteschaltung des Strahlungsfühlers (30) auf die Siedetemperatur des Wassers (z.B. 100°C) geeicht wird.

9. Anordnung nach einem der Ansprüche 1 bis 8, dadurch gekennzeichnet, dass ein Strahlungsfühler (30) im Zeitmultiplex für mehrere Kochtöpfe (10, 10'), die im gleichen Abstand zum Strahlungsfühler (30) angeordnet sind, verwendet ist.

10. Anordnung nach Anspruch 9, dadurch gekennzeichnet, dass eine mechanische Stelleinrichtung den Strahlungsfühler (30) mit seiner Eintrittsfläche (31) nacheinander auf die Abstrahlflächen (12, 12') der Kochtöpfe (10, 10') einstellt und ausrichtet.

11. Anordnung nach Anspruch 9, dadurch gekennzeichnet, dass der Strahlungsfühler (30) mit seiner Eintrittsfläche über optische Systeme mit den Abstrahlflächen (12, 12') mehrerer Kochtöpfe (10, 10') in Verbindung steht und dass die optischen Systeme mittels Abblendeinrichtungen, wie Blenden oder dgl. wahlweise durchschaltbar und sperrbar sind.

12. Anordnung nach Anspruch 11, dadurch gekennzeichnet, dass als Abblendeinrichtungen elektronisch steuerbare Lichtventile verwendet sind.

13. Anordnung nach Anspruch 9, dadurch gekennzeichnet, dass mittels eines drehbar gelagerten und verstellbaren Spiegels die Ausrichtung des ortsfesten Strahlungsfühlers (30) nacheinander auf die Abstrahlflächen (12, 12') mehrerer Kochtöpfe (10, 10') vorgenommen wird.

14. Anordnung nach einem der Ansprüche 10 bis 12, dadurch gekennzeichnet, dass das Fehlen eines Messwertsignals am Ausgang des Strahlungsfühlers (30) nach einer Vorgabezeit bei einer eingeschalteten Heizplatte (21, 23) als Störungssignal gewertet und zur Abschaltung der Heizplatte (21, 23) ausgenützt ist.

## Claims

1. Arrangement for the temperature measurement in a heating system consisting of a cooking vessel with food for cooking in it placed on a hotplate by which the temperature of the food in the cooking vessel is measured, characterized by the fact

that the cooking vessels (10, 10') which can be used in this system are provided with circular surrounding radiating surfaces (12, 12') in the transition area from the bottom of the cooking vessel (11, 11') and the vessel wall,

that a radiation sensor (30) with focussing device is orientated to the radiating surface (12 or 12') of the cooking vessel (10 or 10') placed on the hotplate (21, 23) and

that the radiation sensor (30) is arranged at a distance to the radiating surface (12 or 12') which corresponds to the distance between the neck (35) in the radiation measuring field (Fig. 2) of the radiation sensor (30) and the inlet surface (31) of the radiation sensor (30).

2. Arrangement according to claim 1, characterized by the fact, that the cooking vessels (10, 10') are placed on the hotplates (21, 23) in given positions.

3. Arrangement according to claim 2, characterized by the fact, that the hotplates (21, 23) are surrounded by retaining edges (22, 24) or something equivalent which protrude the surface of placement of the hotplates (21, 23).

4. Arrangement according to one of claim 1 to 3, characterized by the fact, that the radiating surfaces (12, 12') of the cooking vessels (10, 10') placed on the hotplates (21, 23) are located parallely and centrally relative to the inlet surface of the radiation sensor (30).

5. Arrangement according to one of claim 1 to 4, characterized by the fact, that the radiating surfaces (12, 12') are located vertically to the bottom of the cooking vessel (10, 10').

6. Arrangement according to one of claim 1 to 5, characterized by the fact, that the radiating surfaces (12, 12') are dark mat coloured, preferably black.

7. Arrangement according to one of claim 1 to 6, characterized by the fact, that the inlet surface of the radiation sensor (30) is covered by means of a radiation permeable protective disk (32, 33).

8. Arrangement according to one of claim 1 to 7, characterized by the fact, that a cooking vessel with water is used as calibration element, whereby during the cooking of the water the evaluating circuit of the radiation sensor (30) is calibrated to the ebullition water temperature (e.g. 100 °C).

9. Arrangement according to one of claim 1 to 8, characterized by the fact, that a radiation sensor (30) is used as time-division multiplexer for several cooking vessels (10, 10') which are arranged at the same distance to the radiation sensor (30).

10. Arrangement according to claim 9, characterized by the fact, that a mechanical regulation device adjusts and orientates the radiation sensor (30), with its inlet surface (31) relative to the radiating surfaces (12, 12') of the cooking vessels (10, 10') one after another.

11. Arrangement according to claim 9, characterized by the fact, that the radiation sensor (30) with its inlet surface is connected via optical systems with the radiating surfaces (12, 12') of several cooking vessels (10, 10') and that the optical systems can optionally be either opened or locked via stopping down devices like diaphragms.

12. Arrangement according to claim 11, characterized by the fact, that electronically controllable light valves are used as stopping down device.

13. Arrangement according to claim 9, characterized by the fact, that by means of a rotatable and adjustable mirror the orientation of the fixed radiation sensor (30) is executed relative to the radiating surfaces (12, 12') of several cooking vessels (10, 10') one after another.

14. Arrangement according to one of claim 10 to 12, characterized by the fact, that the missing of a measuring signal at the output of the radiation sensor (30) after a given time period with the hotplate (21, 23) switched on is evaluated as fault signal and is used to switch off the hotplate (21, 23).

## Revendications

1. Dispositif pour mesurer la température dans un système de chauffage comportant une marmite ou casserole, placée et chauffée sur une plaque chauffante et contenant de la matière à cuire, dispositif dans lequel on décèle la température de la matière à cuire contenue dans la marmite, et caractérisé

en ce que les marmites (10, 10') utilisables dans le système sont équipées, dans la zone constituant la transition entre le fond (11, 11') et la paroi de chaque marmite, de surfaces radiantes (12, 12') périphériques annulaires,

en ce qu'un capteur (30) de rayonnement, comportant un dispositif de focalisation, est dirigé vers la surface radiante (12 ou 12') de la marmite (10 ou 10') placée sur la plaque chauffante (21, 23), et

en ce que le capteur (30) de rayonnement est disposé, par rapport à la surface radiante (12 ou 12'), à une distance correspondant à la distance entre la zone étroite (35) du domaine de mesure de rayonnement (figure 2) du capteur (30) de rayonnement et la surface (31) d'entrée du capteur (30) de rayonnement.

2. Dispositif selon la revendication 1, caractérisé en ce que les marmites (10, 10') sont fixées en des positions prédéterminées sur les plaques chauffantes (21, 23).

3. Dispositif selon la revendication 2, caractérisé en ce que les plaques chauffantes (21, 23) sont entourées de rebords (22, 24) de retenue ou d'éléments analogues qui font saillie au-dessus des surfaces de support des plaques chauffantes (21, 23).

4. Dispositif selon l'une des revendications 1 à 3, caractérisé en ce que les surfaces radiantes (12, 12') des marmites (10, 10') placées sur les plaques chauffantes (21, 23) sont dirigées de manière à être parallèles à la surface d'entrée et à être centrées sur cette surface d'entrée du capteur (30) de rayonnement.

5. Dispositif selon l'une des revendications 1 à 4, caractérisé en ce que les surfaces radiantes (12, 12') sont perpendiculaires aux fonds (11, 11') de la marmite (10, 10').

6. Dispositif selon l'une des revendications 1 à 5, caractérisé en ce que les surfaces radiantes (12, 12') sont de couleur mate foncée, en particulier noires.

7. Dispositif selon l'une des revendications 1 à 6, caractérisé en ce que la surface d'entrée du capteur (30) de rayonnement est recouverte d'une vitre protectrice (32, 33) transparente à l'égard du rayonnement.

8. Dispositif selon l'une des revendications 1 à 7, caractérisé en ce qu'on utilise comme élément d'étalonnage une marmite (10, 10') emplie d'eau, ce qui permet, lors de l'ébullition de l'eau, d'étalonner à la température d'ébullition de l'eau (par exemple à 100°C) le circuit d'évaluation du capteur (30) de rayonnement.

9. Dispositif selon l'une des revendications 1 à 8, caractérisé en ce qu'on utilise un capteur (30) de rayonnement, en multiplexage par répartition dans le temps, pour plusieurs marmites (10, 10') qui sont disposées à la même distance du capteur (30) de rayonnement.

10. Dispositif selon la revendication 9, caractérisé en ce qu'un dispositif mécanique de réglage règle et oriente le capteur (30) de rayonnement, et sa surface (31) d'entrée, successivement sur les surfaces radiantes (12, 12') des marmites (10, 10').

11. Dispositif selon la revendication 9, caractérisé en ce que le capteur (30) de rayonnement est, avec sa surface d'entrée, en liaison, grâce à des systèmes optiques, avec les surfaces radiantes (12, 12') de plusieurs marmites (10, 10') et en ce qu'au moyen de dispositifs de diaphragmation, comme des diaphragmes ou éléments analogues, les systèmes optiques sont, au choix, transparents et obturables ou opaques.

12. Dispositif selon la revendication 11, caractérisé en ce qu'on utilise, comme dispositifs de diaphragmation, des modulateurs de lumière électroniquement commandables.

13. Dispositif selon la revendication 9, caractérisé en ce qu'on effectue à l'aide d'un miroir monté rotatif et ajustable, l'orientation du capteur (30) de rayonnement, monté en un endroit fixe, successivement vers les surfaces radiantes (12, 12') de plusieurs marmites (10, 10').

14. Dispositif selon l'une des revendications 10 à 12, caractérisé en ce que l'absence d'un signal représentatif d'une valeur de mesure à la sortie du capteur (30) de rayonnement est considérée, après un temps prédéterminé et dans le cas d'une plaque chauffante (21, 23) sous tension de service, comme étant le signal d'un dérangement et sert à commander la déconnexion ou extinction de la plaque chauffante (21, 23).

Fig.1

Fig.2

0 142 153